# EUROPÄISCHE PATENTANMELDUNG

(11) **EP 4 378 631 A1**
(43) Veröffentlichungstag der Anmeldung: **05.06.2024**
(21) Anmeldenummer: 23206349.5
(22) Anmeldetag: 27.10.2023
(51) Int. Cl.: B25F 5/00, B25F 5/02

(54) **HANDWERKZEUGMASCHINE MIT EINEM DISTANZELEMENT**

(30) Priorität: 30.11.2022 DE 102022212835
(71) Anmelder: Robert Bosch GmbH, 70442 Stuttgart (DE)
(72) Erfinder: Herr, Tobias, 70569 Stuttgart (DE); Blum, Jens, 70794 Filderstadt (DE)

(57) **Zusammenfassung**

Bei einer Handwerkzeugmaschine mit einer Werkzeugaufnahme (150) und einem Gehäuse, in dem ein Antriebsmotor (114) mit einer Motorwelle (116) und ein Getriebe (118) angeordnet sind, wobei das Getriebe (118) in einem Getriebegehäuse (119) angeordnet ist, und wobei zwischen dem Getriebe (118) und dem Antriebsmotor (114) ein Distanzelement (250) angeordnet ist, das einen scheibenförmigen Grundkörper (252) aufweist, an dem ein rohrförmiger Lagerungsabschnitt (251) zur Lagerung auf der Motorwelle (116) ausgebildet ist, bildet das Distanzelement (250) eine Dichtung, insbesondere eine Labyrinthdichtung, aus.

## Beschreibung

### Stand der Technik

Die vorliegende Erfindung betrifft eine Handwerkzeugmaschine mit einer Werkzeugaufnahme und einem Gehäuse, in dem ein Antriebsmotor mit einer Motorwelle und ein Getriebe angeordnet sind, wobei das Getriebe in einem Getriebegehäuse angeordnet ist, und wobei zwischen dem Getriebe und dem Antriebsmotor ein Distanzelement angeordnet ist, das einen scheibenförmigen Grundkörper aufweist, an dem ein rohrförmiger Lagerungsabschnitt zur Lagerung auf der Motorwelle ausgebildet ist.

Aus dem Stand der Technik ist eine derartige Handwerkzeugmaschine mit einer Werkzeugaufnahme und einem Gehäuse, in dem ein Antriebsmotor mit einer Motorwelle und ein Getriebe angeordnet sind, bekannt. Zwischen dem Getriebe und dem Antriebsmotor ist ein Distanzelement angeordnet, das einen scheibenförmigen Grundkörper aufweist. An dem scheibenförmigen Grundkörper ist ein rohrförmiger Lagerungsabschnitt zur Lagerung auf der Motorwelle ausgebildet. Zusätzlich ist dem Getriebe ein Wellendichtring oder ein abgedichtetes Kugellager zugeordnet, sodass kein Schmiermittel, wie Öl/Fett, aus dem Getriebe in Richtung Antriebsmotor austreten kann.

### Offenbarung der Erfindung

Die Erfindung betrifft eine Handwerkzeugmaschine mit einer Werkzeugaufnahme und einem Gehäuse, in dem ein Antriebsmotor mit einer Motorwelle und ein Getriebe angeordnet sind, wobei das Getriebe in einem Getriebegehäuse angeordnet ist, und wobei zwischen dem Getriebe und dem Antriebsmotor ein Distanzelement angeordnet ist, das einen scheibenförmigen Grundkörper aufweist, an dem ein rohrförmiger Lagerungsabschnitt zur Lagerung auf der Motorwelle ausgebildet ist. Das Distanzelement bildet eine Dichtung, insbesondere eine Labyrinthdichtung, aus.

Die Erfindung ermöglicht somit die Bereitstellung einer Handwerkzeugmaschine, bei der durch das als Dichtung ausgebildete Distanzelement eine vergleichsweise kurze und kompakte Bauweise der Handwerkzeugmaschine ermöglicht wird, da auf ein separates Dichtelement verzichtet werden kann.

Vorzugsweise greift der Lagerungsabschnitt des Distanzelements in Richtung einer Rotationsachse der Werkzeugaufnahme auf der Motorwelle in das Getriebegehäuse ein.

Somit kann auf einfache Art und Weise eine kompakte Verbindung von Antriebsmotor und Getriebe ermöglicht werden.

Das Getriebe weist vorzugsweise eine Zwischenwelle auf, die eine topfförmige Aufnahme ausbildet, wobei der Lagerungsabschnitt zumindest abschnittsweise in der topfförmigen Aufnahme angeordnet ist.

Somit kann einfach und unkompliziert eine Anordnung des Distanzelements ermöglicht werden.

Der Antriebsmotor weist bevorzugt einen Rotor auf, wobei der scheibenförmige Grundkörper an seiner vom Lagerungsabschnitt abgewandten Stirnseite gegen den Rotor anliegt.

Somit kann eine zumindest im Wesentlichen spaltfreie Anordnung des Distanzelements am Antriebsmotor ermöglicht werden.

Vorzugsweise weist der Lagerungsabschnitt an seiner dem Getriebe zugewandten Stirnseite zumindest eine Aufnahme auf, die zum Sammeln von aus dem Getriebe austretendem Schmiermittel ausgebildet ist.

Somit kann sicher und zuverlässig eine Beschädigung oder Zerstörung des Antriebsmotors aufgrund von aus dem Getriebe austretendem Schmiermittel zumindest weitgehend verhindert werden.

Gemäß einer Ausführungsform ist die Aufnahme nach Art eines Kreisringsegments oder Kreisrings ausgebildet.

Somit kann auf einfache Art und Weise ein Schmiermittel-Depot bereitgestellt werden, in dem das Schmiermittel gesammelt werden kann.

Bevorzugt weist das Getriebe ein im Getriebegehäuse fixiertes Lagerelement auf, in dem die topfförmige Aufnahme der Zwischenwelle drehbeweglich gelagert ist.

Somit kann die Baulänge der Handwerkzeugmaschine bzw. einer entsprechenden Antriebseinheit leicht und unkompliziert reduziert werden.

Das Lagerelement und der Lagerungsabschnitt sind vorzugsweise zumindest bereichsweise koaxial zueinander angeordnet.

Somit kann auf einfache Art und Weise eine kompakte Anordnung ermöglicht werden.

Der scheibenförmige Grundkörper weist bevorzugt einen Außendurchmesser auf, der größer als ein Innendurchmesser des Lagerelements ist.

Somit kann einfach und unkompliziert eine Überlappung des scheibenförmigen Grundkörpers mit dem Lagerelement in radialer Richtung ermöglicht werden.

Vorzugsweise ist zwischen einem Außenumfang des Lagerungsabschnitts und einem Innenumfang der topfförmigen Aufnahme ein Radialspalt ausgebildet.

Somit kann auf einfache Art und Weise eine Rotationsbewegung des Distanzelement mit der Motorwelle ermöglicht werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine schematische Ansicht einer Handwerkzeugmaschine mit einem Antriebsmotor und einem Getriebe,
- Fig. 2: einen Ausschnitt eines Längsschnitts durch die Handwerkzeugmaschine von Fig. 1 zur Verdeutlichung eines zwischen dem Antriebsmotor und dem Getriebe von Fig. 1 angeordneten Distanzelements,
- Fig. 3: eine perspektivische Ansicht des Distanzelements von Fig. 2,
- Fig. 4: eine perspektivische Schnittansicht eines alternativen Distanzelements, und
- Fig. 5: einen Ausschnitt eines Längsschnitts durch die Handwerkzeugmaschine von Fig. 1 zur Verdeutlichung des zwischen dem Antriebsmotor und dem Getriebe von Fig. 1 angeordneten Distanzelements von Fig. 4.

### Beschreibung der Ausführungsbeispiele

In den Figuren werden Elemente mit gleicher oder vergleichbarer Funktion mit identischen Bezugszeichen versehen und nur einmal genauer beschrieben.

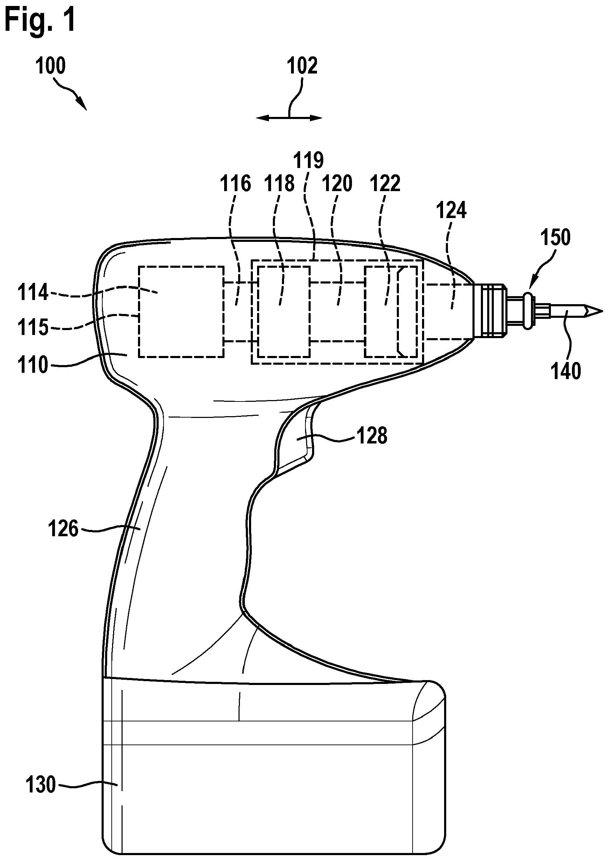

Fig. 1 zeigt eine mit einer Werkzeugaufnahme 150 versehene Handwerkzeugmaschine 100, die ein Gehäuse 110 mit einem Handgriff 126 aufweist. Gemäß einer Ausführungsform ist die Handwerkzeugmaschine 100 zur netzunabhängigen Stromversorgung mechanisch und elektrisch mit einem Akkupack 130 verbindbar.

In dem Gehäuse 110 sind illustrativ ein von dem Akkupack 130 mit Strom versorgter, elektrischer Antriebsmotor 114 und ein Getriebe 118 angeordnet. Der Antriebsmotor 114 ist z.B. über einen Handschalter 128 betätigbar, d.h. ein- und ausschaltbar, und kann ein beliebiger Motortyp sein, z.B. ein elektronisch kommutierter Motor oder ein Gleichstrommotor. Vorzugsweise ist der Antriebsmotor 114 derart elektronisch steuer- bzw. regelbar, dass sowohl ein Reversierbetrieb, als auch Vorgaben hinsichtlich einer gewünschten Drehgeschwindigkeit realisierbar sind. Die Funktionsweise und der Aufbau eines geeigneten Antriebsmotors sind aus dem Stand der Technik hinreichend bekannt, sodass hier zwecks Knappheit der Beschreibung auf eine eingehende Beschreibung hiervon verzichtet wird.

Der Antriebsmotor 114 ist über eine zugeordnete Motorwelle 116 mit dem Getriebe 118 verbunden, das eine Drehung der Motorwelle 116 in eine Drehung eine Abtriebswelle 124 umwandelt. Diese Umwandlung erfolgt bevorzugt derart, dass die Abtriebswelle 124 sich relativ zur Motorwelle 116 mit vergrößertem Drehmoment, aber verringerter Drehgeschwindigkeit dreht.

Der Antriebsmotor 114 ist illustrativ in einem Motorgehäuse 115 angeordnet. Das Getriebe 118 ist in einem Getriebegehäuse 119 angeordnet. Das Getriebegehäuse 119 und das Motorgehäuse 115 sind beispielhaft in dem Gehäuse 110 angeordnet.

Gemäß einer Ausführungsform ist ein optionales mechanisches Schlagwerk 122 vorgesehen. Der Antriebsmotor 114 ist dabei über eine zugeordnete Motorwelle 116 mit dem Getriebe 118 derart verbunden, dass eine Drehung der Motorwelle 116 in eine Drehung einer zwischen Getriebe 118 und dem optionalen mechanischen Schlagwerk 122 vorgesehenen Zwischenwelle 120 umgewandelt wird. Das optionale mechanische Schlagwerk 122 und das Getriebe 118 sind illustrativ in einem gemeinsamen Getriebegehäuse 119 angeordnet. Alternativ kann das optionale mechanische Schlagwerk 122 auch in einem separaten Schlagwerksgehäuse angeordnet sein.

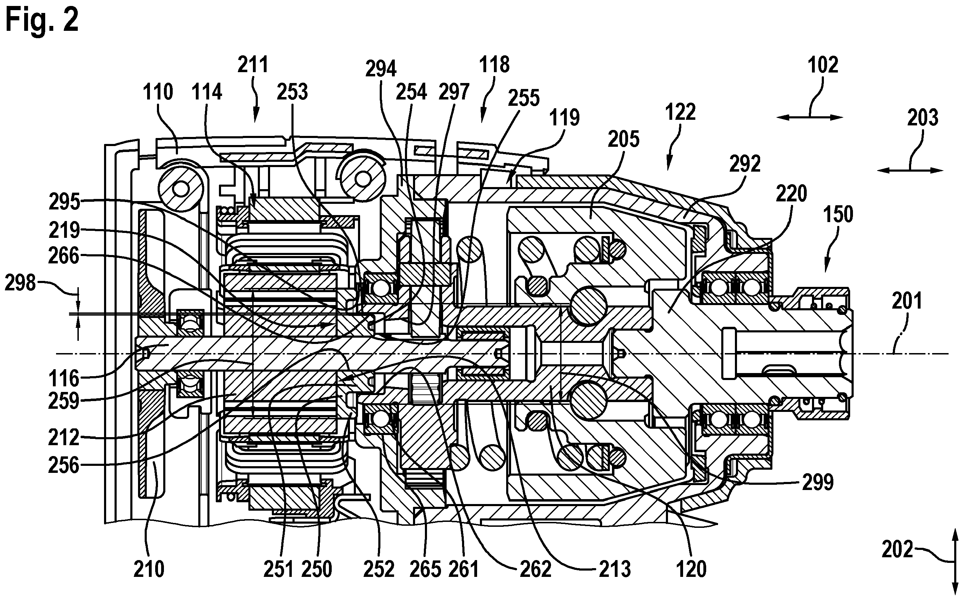

Das mit der Zwischenwelle 120 verbundene, optionale mechanische Schlagwerk 122 ist beispielhaft ein Dreh- bzw. Rotationsschlagwerk, das schlagartige Drehimpulse mit hoher Intensität erzeugt und auf eine Abtriebswelle 124, z.B. eine Abtriebsspindel, überträgt. Nachfolgend wird das optionale mechanische Schlagwerk als "mechanisches Drehschlagwerk 122" bezeichnet. Insbesondere ist das mechanische Drehschlagwerk 122 zum schlagenden Antrieb der Werkzeugaufnahme 150 vorgesehen. Das mechanische Drehschlagwerk 122 weist illustrativ einen federbeaufschlagten Schlagkörper (205 in Fig. 2) auf, der mit der Zwischenwelle 120 gekoppelt ist und in axialer Richtung 102 des Getriebes 118 verschiebbar an der Zwischenwelle 120 gelagert ist.

An der Abtriebswelle 124 ist die Werkzeugaufnahme 150 vorgesehen, die bevorzugt zur Aufnahme von Einsatzwerkzeugen ausgebildet ist und vorzugsweise mit einem Einsatzwerkzeug 140 mit Außenmehrkant-Kupplung verbindbar ist. Das Einsatzwerkzeug 140 ist beispielhaft als Schrauberbit mit Außenmehrkant-Kupplung, illustrativ einer Achtkant-Kupplung, ausgebildet. Ein derartiges Schrauberbit ist hinreichend aus dem Stand der Technik bekannt, sodass hier zwecks Knappheit der Beschreibung auf eine eingehende Beschreibung verzichtet wird. Des Weiteren ist eine Verriegelungseinheit 190 zum Ver- und Entriegeln des illustrativ in der Werkzeugaufnahme 150 angeordneten Einsatzwerkzeugs 140 vorgesehen.

Fig. 2 zeigt den im Gehäuse 110 angeordneten Antriebsmotor 114 mit der Motorwelle 116 und das Getriebe 118 von Fig. 1. Gemäß einer Ausführungsform ist dem Antriebsmotor 114 ein Lüfter 210 zugeordnet. Der Lüfter 210 ist bevorzugt an einem illustrativ linken Ende der Motorwelle 116 angeordnet. Hierbei ist der Antriebsmotor 114 axial zwischen dem Lüfter 210 und dem Getriebe 118 angeordnet.

Illustrativ weist das Getriebegehäuse 119 zwei miteinander verbundene Abschnitte 292, 294 auf. Der Abschnitt 294 ist vorzugsweise als Deckel ausgebildet, der am Abschnitt 292 befestigt ist. Der Abschnitt 294 weist eine dem Antriebsmotor 114 zugewandte axiale Ausnehmung 295 auf, durch die die Motorwelle 116 illustrativ in das Getriebegehäuse 119 hindurchragt. Des Weiteren weist der Antriebsmotor 114 einen Stator 211 und einen Rotor 212 auf. Beispielhaft weist der Antriebsmotor 114 einen Außenstator 211 und einen Innenrotor 212 auf.

Illustrativ weist die Werkzeugaufnahme 150 eine Längserstreckung 203 auf. Vorzugsweise ist die Längserstreckung 203 gleichzeitig eine axiale Längserstreckung der Motorwelle 116. Es wird darauf hingewiesen, dass im Kontext der vorliegenden Erfindung unter dem Begriff "axial" eine Richtung entlang der Längserstreckung 203 der Werkzeugaufnahme 150 verstanden wird. Des Weiteren wird unter dem Begriff "radial" eine Richtung annähernd senkrecht zur Längserstreckung 203 der Werkzeugaufnahme 150 verstanden. Somit ist die radiale Richtung 202 annähernd senkrecht zur axialen Richtung 102 des Getriebes 118 bzw. entlang der Längserstreckung 203 der Werkzeugaufnahme 150 ausgerichtet. Des Weiteren ist die axiale Richtung 102 im Wesentlichen parallel zur Längserstreckung 203 der Werkzeugaufnahme 150 bzw. parallel zu einer Rotationsachse 201 der Werkzeugaufnahme 150 ausgerichtet.

Bevorzugt ist zwischen dem Getriebe 118 und dem Antriebsmotor 114 ein Distanzelement 250 angeordnet. Das Distanzelement 250 weist einen scheibenförmigen Grundkörper 252 auf, an dem ein rohrförmiger bzw. hülsenförmiger Lagerungsabschnitt 251 zur Lagerung auf der Motorwelle 116 ausgebildet ist.

Eine der Motorwelle 116 zugewandt angeordnete Innenaufnahme 256 des rohrförmigen Lagerungsabschnitts 251 des Distanzelements 250 ist dabei bevorzugt auf einem Außenumfang der Motorwelle 116 angeordnet. Vorzugsweise ist das Distanzelement 250 drehbar mit der Motorwelle 116 ausgebildet. Bevorzugt ist der rohrförmige Lagerungsabschnitt 251 in axialer Richtung 102 ausgerichtet.

Erfindungsgemäß bildet das Distanzelement 250 eine Dichtung, insbesondere eine Labyrinthdichtung, aus. Dabei greift der Lagerungsabschnitt 251 des Distanzelements 250 vorzugsweise axial bzw. in Richtung der Rotationsachse 201 der Werkzeugaufnahme 150 in das Getriebegehäuse 119 ein.

Gemäß einer Ausführungsform weist die dem Getriebe 118 zugeordnete Zwischenwelle 120 eine topfförmige Aufnahme 262 auf. Hierbei ist vorzugsweise der Lagerungsabschnitt 251 zumindest abschnittsweise in der topfförmigen Aufnahme 262 angeordnet.

Bevorzugt liegt der scheibenförmige Grundkörper 252 an seiner vom Lagerungsabschnitt 251 abgewandten Stirnseite 219 axial gegen den Rotor 212 an. An seiner dem Getriebe 118 zugewandten Stirnseite 255 weist der Lagerungsabschnitt 251 vorzugsweise zumindest eine Aufnahme 254 auf, die zum Sammeln von aus dem Getriebe 118 austretendem Schmiermittel, wie z.B. Fett und/oder Öl, ausgebildet ist. Gemäß einer Ausführungsform ist die Aufnahme 254 nach Art eines Kreisringsegments oder Kreisrings ausgebildet. Bevorzugt weist die Zwischenwelle 120 in axialer Richtung 102 - illustrativ rechts - neben der topfförmigen Aufnahme 262 eine Rampe 297 auf. Die Rampe 297 ist vorzugsweise in Richtung des Distanzelements 250 geneigt ausgebildet.

Bei einem Betrieb der Handwerkzeugmaschine 100 von Fig. 1, bzw. bei einer Rotation der Motorwelle 116, wird Schmiermittel entlang der Rampe 297 zum Distanzelement 250 hin bzw. in die Aufnahme 254 beaufschlagt. Das Schmiermittel wird in der Aufnahme 254 gesammelt und ein Austreten des Schmiermittels auf dem Getriebegehäuse 119 wird verhindert.

Bevorzugt weist das Getriebe 118 ein im Getriebegehäuse 119 fixiertes Lagerelement 265 auf. Vorzugsweise ist das Lagerelement 265 als Wälzlager, insbesondere als Kugellager, ausgebildet. An einem der Zwischenwelle 120 zugewandten Innenumfang des Lagerelements 265 ist die Zwischenwelle 120, insbesondere die topfförmige Aufnahme 262 der Zwischenwelle 120, bevorzugt drehbeweglich gelagert. Darüber hinaus ist das Lagerelement 265 radial zwischen dem Getriebegehäuse 119 und der topfförmigen Aufnahme 262 angeordnet. Insbesondere ist das Lagerelement 265 an einem dem Antriebsmotor 116 zugewandten Abschnitt der Zwischenwelle 120 an einem Außenumfang 261 angeordnet. Vorzugsweise ist auch das Distanzelement 250 radial zwischen der Zwischenwelle 120 und der topfförmigen Aufnahme 262 angeordnet.

Das Lagerelement 265 und der Lagerungsabschnitt 251 des Distanzelements 250 sind zumindest bereichsweise koaxial zueinander angeordnet. Hierbei überlappen sich das Lagerelement 265 und der Lagerungsabschnitt 251 in axialer Richtung 102 abschnittsweise.

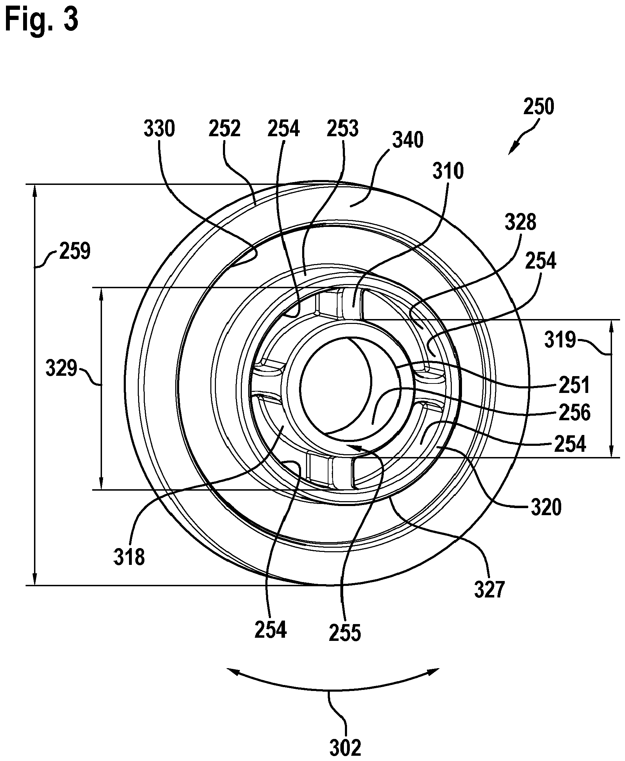

Illustrativ weist der scheibenförmige Grundkörper 252 einen Außendurchmesser 259 auf. Der Außendurchmesser 259 ist bevorzugt größer als ein Innendurchmesser 299 des Lagerelements 265. Des Weiteren ist ein Durchmesser einer dem Abschnitt 294 des Getriebegehäuses 119 zugeordneten Aufnahme 295 vorzugsweise größer als der Durchmesser 259 des Distanzelements 250 bzw. des scheibenförmigen Grundkörpers 252. Darüber hinaus weist der scheibenförmige Grundkörper 252 an seinem radial äußeren Bereich einen Ringkragen (340 in Fig. 3) auf. Der Ringkragen (340 in Fig. 3) greift illustrativ in die Aufnahme 295 axial ein.

Gemäß einer Ausführungsform ist zwischen einem Außenumfang 253 des Lagerungsabschnitts 251 und einem Innenumfang 266 der topfförmigen Aufnahme 262 ein Radialspalt 298 ausgebildet. Bevorzugt weist der Radialspalt 298 eine Breite im Bereich von 0,8 mm bis 1,6 mm auf. Darüber hinaus weist das Distanzelement 250 Kunststoff und/oder Messing auf.

Des Weiteren zeigt Fig. 2 das mechanische Drehschlagwerk 122, das bevorzugt einen federbeaufschlagten Schlagkörper 205 und einen vom Schlagkörper 205 beaufschlagbaren Amboss 220 aufweist. Bevorzugt ist der Amboss 220 der Werkzeugaufnahme 150 zugeordnet. Das mechanische Drehschlagwerk 122 erzeugt schlagartige Drehimpulse mit hoher Intensität und überträgt diese auf die Abtriebswelle 124, bzw. über den Amboss 220 auf die Werkzeugaufnahme 150. Der federbeaufschlagte Schlagkörper 205 ist in axialer Richtung 102 des Getriebes 118 verschiebbar gelagert. Ein derartiges mechanisches Drehschlagwerk 122 ist aus dem Stand der Technik hinreichend bekannt, sodass hier zwecks Knappheit der Beschreibung auf eine eingehende Beschreibung verzichtet wird.

Fig. 3 zeigt das Distanzelement 250 von Fig. 2 mit seinem scheibenförmigen Grundkörper 252 und dem rohrförmigen Lagerungsabschnitt 251. Dabei verdeutlicht Fig. 3 die an der Stirnseite 255 des Lagerungsabschnitts 251 angeordnete, zumindest eine Aufnahme 254. Gemäß einer Ausführungsform ist koaxial zum Lagerungsabschnitt 251 ein Ringkragen 320 angeordnet. Vorzugsweise bildet ein Außenumfang 327 des Ringkragens 320 den Außenumfang 253 des Lagerungsabschnitts 251 aus.

Der Ringkragen 320 weist illustrativ einen dem Lagerungsabschnitt 251 zugewandten Innendurchmesser 329 auf. Des Weiteren weist der Lagerungsabschnitt 251 einen dem Ringkragen 320 zugewandten Außendurchmesser 319 auf. Bevorzugt ist radial zwischen dem Außendurchmesser 319 und dem Innendurchmesser 329 die Aufnahme 254 ausgebildet. Vorzugsweise ist die Aufnahme 254 radial zwischen einem Innenumfang 328 des Ringkragens 320 und einem Außenumfang 318 des Lagerungsabschnitts 251 ausgebildet.

Illustrativ sind vier Aufnahmen 254 ausgebildet. Vorzugsweise sind die illustrativ vier Aufnahmen 254 nach Art eines Kreisringsegments ausgebildet. Hierbei ist jeweils zwischen zwei in Umfangsrichtung 302 des Distanzelements 250 benachbarten Aufnahmen 254 ein Trennsteg 310 angeordnet. Die illustrativ vier Trennstege 310 sind dabei radial ausgerichtet.

Es wird darauf hingewiesen, dass auch mehr als vier Aufnahmen 254 oder weniger als vier Aufnahmen 254 vorgesehen sein können. Des Weiteren können die Trennstege 310 in einer beliebigen Richtung, die nicht radial sein muss, angeordnet sein.

Darüber hinaus weist der scheibenförmige Grundkörper 252 an seinem radial äu-ßeren Bereich illustrativ einen Ringkragen 340 auf. Radial zwischen dem Ringkragen 340 und dem Ringkragen 320 ist bevorzugt eine Aufnahme 330 angeordnet. Vorzugsweise ist eine axiale Breite des Ringkragens 340 kleine als eine axiale Breite des Ringkragens 320. Der Durchmesser 259 des scheibenförmigen Grundkörpers 252 ist gleichzeitig der Außendurchmesser des Ringkragens 340.

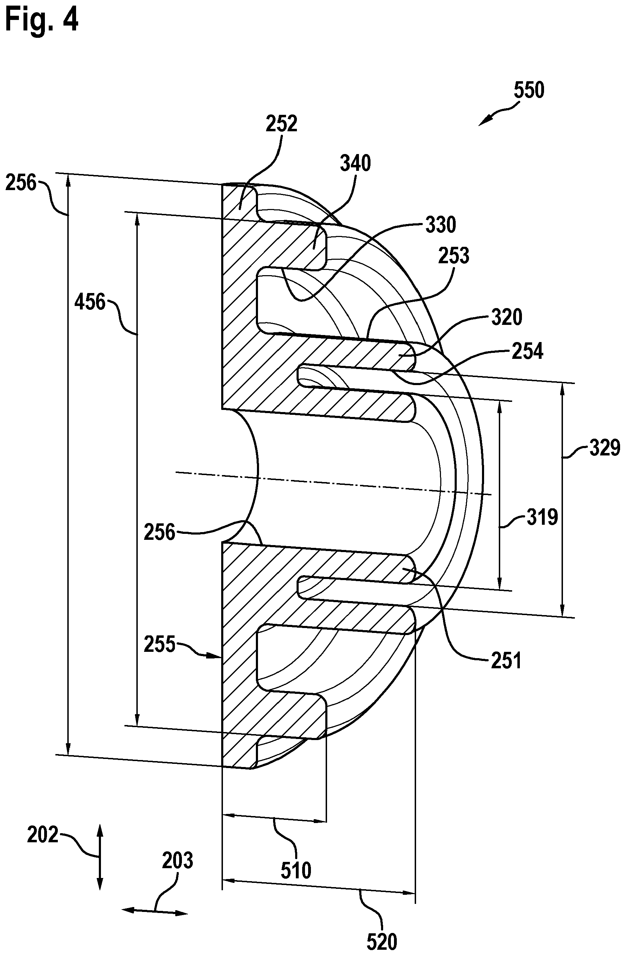

Fig. 4 zeigt ein alternatives Distanzelement 550 mit dem scheibenförmigen Grundkörper 252, den Ringkragen 310, 340, dem Lagerungsabschnitt 251 sowie einer Aufnahme 254 von Fig. 2 und Fig. 3. Gemäß einer Ausführungsform ist die Aufnahme 254 als Kreisring ohne Trennstege 310 von Fig. 3 ausgebildet.

Darüber hinaus weist in Fig. 4 der Ringkragen 340 einen Außendurchmesser 456 auf. Der Außendurchmesser 456 ist kleiner als der Durchmesser 256 des scheibenförmigen Grundkörpers 252. Des Weiteren verdeutlicht Fig. 4 eine axiale Breite 510 des Ringkragens 340 und eine axiale Breite 520 des Lagerungsabschnitts 251 und des Ringkragens 320. Illustrativ ist die axiale Breite 520 des Ringkragens 320 und des Lagerungsabschnitts 251 gleich groß. Jedoch können die axialen Breiten des Ringkragens 320 und des Lagerungsabschnitts 251 auch unterschiedlich sein. Vorzugsweise ist die axiale Breite 510 des Ringkragens 340 kleiner als die axiale Breite 520 des rohrförmigen Lagerungsabschnitts 251 und des Ringkragens 320.

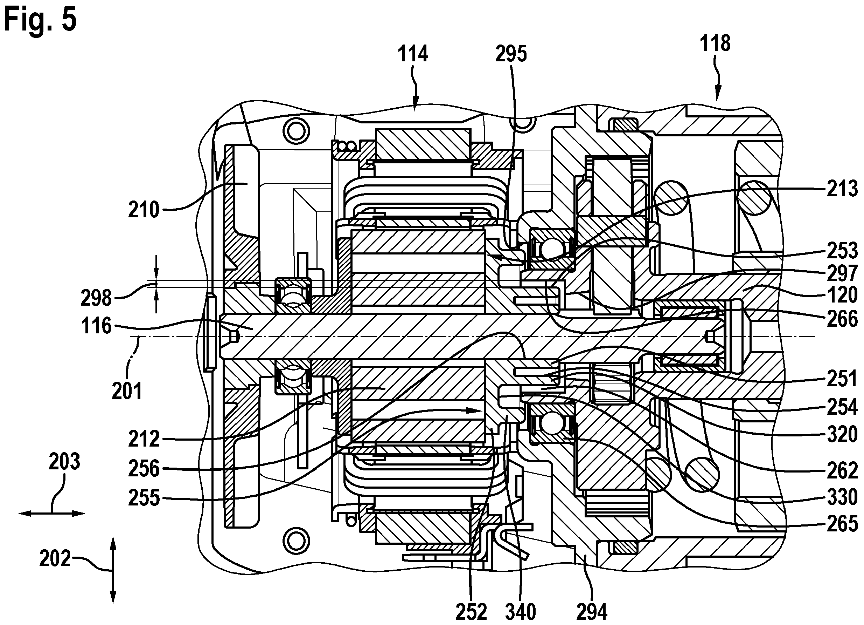

Fig. 5 zeigt den Antriebsmotor 114 und das Getriebe 118 von Fig. 2 und das Distanzelement 550 von Fig. 4. Dabei verdeutlicht Fig. 5 das axiale Eingreifen des Ringkragens 340 in die Aufnahmen 295 des Abschnitts 294 des Getriebegehäuses 118. Darüber hinaus zeigt Fig. 5 das axiale Eingreifen des Ringkragens 320 und des Lagerungsabschnitts 251 in die topfförmige Aufnahme 262 des Getriebegehäuses 119. Daneben verdeutlicht Fig. 5 die radiale Anordnung des Lagerungsabschnitts 251, des Ringkragens 320 und des Lagerelements 265. Dabei sind der Lagerungsabschnitt 251 und der Ringkragen 320 radial innerhalb des Lagerelements 265 angeordnet. Des Weiteren verdeutlicht Fig. 5 den Radialspalt 298, der zwischen dem Außenumfang 253 des Ringkragens 320 und dem Innenumfang 266 der topfförmigen Aufnahme 262 ausgebildet ist. Vorzugsweise kann durch den Radialspalt 298 auch ein Luftaustausch stattfinden.

## Patentansprüche

1. Handwerkzeugmaschine (100) mit einer Werkzeugaufnahme (150) und einem Gehäuse (110), in dem ein Antriebsmotor (114) mit einer Motorwelle (116) und ein Getriebe (118) angeordnet sind, wobei das Getriebe (118) in einem Getriebegehäuse (119) angeordnet ist, und wobei zwischen dem Getriebe (118) und dem Antriebsmotor (114) ein Distanzelement (250) angeordnet ist, das einen scheibenförmigen Grundkörper (252) aufweist, an dem ein rohrförmiger Lagerungsabschnitt (251) zur Lagerung auf der Motorwelle (116) ausgebildet ist, **dadurch gekennzeichnet, dass** das Distanzelement (250) eine Dichtung, insbesondere eine Labyrinthdichtung, ausbildet.

2. Handwerkzeugmaschine nach Anspruch 1, **dadurch gekennzeichnet, dass** der Lagerungsabschnitt (251) des Distanzelements (250) in Richtung einer Rotationsachse (201) der Werkzeugaufnahme (150) auf der Motorwelle (116) in das Getriebegehäuse (119) eingreift.

3. Handwerkzeugmaschine nach Anspruch 2, **dadurch gekennzeichnet, dass** das Getriebe (118) eine Zwischenwelle (120) aufweist, die eine topfförmige Aufnahme (262) ausbildet, wobei der Lagerungsabschnitt (251) zumindest abschnittsweise in der topfförmigen Aufnahme (262) angeordnet ist.

4. Handwerkzeugmaschine nach Anspruch 3, **dadurch gekennzeichnet, dass** der Antriebsmotor (114) einen Rotor (212) aufweist, wobei der scheibenförmige Grundkörper (252) an seiner vom Lagerungsabschnitt (251) abgewandten Stirnseite (219) gegen den Rotor (212) anliegt.

5. Handwerkzeugmaschine nach Anspruch 3 oder 4, **dadurch gekennzeichnet, dass** der Lagerungsabschnitt (251) an seiner dem Getriebe (118) zugewandten Stirnseite (255) zumindest eine Aufnahme (254) aufweist, die zum Sammeln von aus dem Getriebe (118) austretendem Schmiermittel ausgebildet ist.

6. Handwerkzeugmaschine nach Anspruch 5, **dadurch gekennzeichnet, dass** die Aufnahme (254) nach Art eines Kreisringsegments oder Kreisrings ausgebildet ist.

7. Handwerkzeugmaschine nach einem der Ansprüche 3 bis 6, **dadurch gekennzeichnet, dass** das Getriebe (118) ein im Getriebegehäuse (119) fixiertes Lagerelement (265) aufweist, in dem die topfförmige Aufnahme (262) der Zwischenwelle (120) drehbeweglich gelagert ist.

8. Handwerkzeugmaschine nach Anspruch 7, **dadurch gekennzeichnet, dass** das Lagerelement (265) und der Lagerungsabschnitt (251) zumindest bereichsweise koaxial zueinander angeordnet sind.

9. Handwerkzeugmaschine nach Anspruch 7 oder 8, **dadurch gekennzeichnet, dass** der scheibenförmige Grundkörper (252) einen Außendurchmesser (259) aufweist, der größer als ein Innendurchmesser (299) des Lagerelements (265) ist.

10. Handwerkzeugmaschine nach einem der Ansprüche 3 bis 9, **dadurch gekennzeichnet, dass** zwischen einem Außenumfang (253) des Lagerungsabschnitts (251) und einem Innenumfang (266) der topfförmigen Aufnahme (262) ein Radialspalt (298) ausgebildet ist.
